**Europäisches Patentamt**

**European Patent Office**

**Office européen des brevets**

(19)

(11) Veröffentlichungsnummer: **0 183 900**
**B1**

(12) EUROPÄISCHE PATENTSCHRIFT

(45) Veröffentlichungstag der Patentschrift: **11.04.90**

(51) Int. Cl.[5]: **F 16 J 15/32**

(21) Anmeldenummer: **85105628.3**

(22) Anmeldetag: **08.05.85**

(54) **Stangen- oder Kolbendichtung.**

(30) Priorität: **01.12.84 DE 3443873**

(43) Veröffentlichungstag der Anmeldung:
**11.06.86 Patentblatt 86/24**

(45) Bekanntmachung des Hinweises auf die
Patenterteilung:
**11.04.90 Patentblatt 90/15**

(84) Benannte Vertragsstaaten:
**AT BE DE FR GB IT NL SE**

(56) Entgegenhaltungen:
**FR-A-2 255 817**
**GB-A-2 115 518**
**US-A-4 040 636**

(73) Patentinhaber: **Firma Carl Freudenberg**
**Höhnerweg 2-4**
**D-6940 Weinheim/Bergstrasse (DE)**

(72) Erfinder: **Blesing, Dieter**
**Im Klingen**
**D-6149 Fürth (DE)**
Erfinder: **Habel, Erich**
**Alfred-Delp-Strasse 2**
**D-6149 Fürth (DE)**
Erfinder: **Metzner, Herman**
**Eichenweg 2**
**D-6942 Mörlenbach (DE)**

Courier Press, Leamington Spa, England.

## Beschreibung

Die Erfindung betrifft eine Stangen- oder Kolbendichtung, umfassend einen in einem Einbauraum angeordneten Dichtring mit einer umlaufenden Ausnehmung, der eine axial in Richtung des abgedichteten Mediums vorspringende Dichtlippe mit einer an dem relativ bewegbaren Maschinenteil anliegenden Dichtkante aufweist und aus polymerem Werkstoff besteht sowie einen in der Ausnehmung angeordneten Andrückring aus elastisch nachgiebigem Material, der einen an das Profil der Ausnehmung angepaßten Querschnitt aufweist sowie eine geringere Härte als der Dichtring, wobei die Ausnehmung des Dichtringes auf ihrer gesamten axialen Erstreckung radial in Richtung des Einbauraumes geöffnet ist und wobei der Andrückring vor dem Einbau in der Radialebene der Dichtkante seine größte radiale Erstreckung aufweist.

Eine solche Dichtung ist aus der FR-A-2 255 817 bekannt. Das damit erzielte Abdichtungsergebnis ist insbesondere im langfristigen Gebrauch wenig befriedigend.

Eine ähnlich gestaltete Dichtung, bei der der Dichtring aus Polyurethan besteht, ist aus der DE-A-27 35 235 bekannt. Sie zeichnet sich bei niedrigen Temperaturen durch ausgezeichnete Gebrauchseigenschaften aus, insbesondere durch einen geringen Verschleiß und äußerst geringe Leckraten. Diese guten Eigenschaften gehen indessen bei ansteigenden Temperaturen schnell verloren, weshalb eine Verwendung in tropischen Gebieten äußerst problematisch ist.

Die deutsche Offenlegungsschrift 25 48 503 nimmt Bezug auf eine in einem Einbauraum angeordnete Dichtungsanordnung für Zylinder und Kolben, bei der die Ausnehmung des Dichtringes auf ihrer gesamten axialen Erstreckung radial in Richtung des Einbauraumes geöffnet ist. Der Dichtring besteht in diesem Falle aus Nylon oder PTFE und wird von einem Andrückring an die Oberfläche des relativ bewegbaren Maschinenteiles angepresst, der im wesentlichen nicht federnd nachgiebig ist. Die für die Erzielung eines Abdichtungsergebnisses erforderliche Anpressung der Dichtkante an das relativ bewegbare Maschinenteil beruht daher ausschließlich auf der elastischen Verformung, die der Dichtring während seines Einbaues erfährt. Der nach dem Einbau erzielte Verformungsgrad ist indessen nicht von konstanter Größe, sondern abhängig von dem sich während des normalen Gebrauchs ergebenden Verschleiß. Die Gebrauchsdauer entsprechender Dichtungsanordnungen ist äußerst unbefriedigend.

Die deutsche Offenlegungsschrift 23 29 504 nimmt Bezug auf eine in einem Einbauraum angeordnete Dichtung für Zylinder und in einem Zylinder hin- und herbewegliche Kolben. Der Dichtring wird in diesem Falle durch ein Abstreifband geringer Dicke gebildet, das etwa im mittleren Bereich eine Dichtkante aufweist und mit dieser an der Oberfläche des relativ bewegbaren Maschinenteiles anliegt. Für die erforderliche Anpressung der Dichtkante an das relativ bewegbare Maschinenteil ist ein federnder O-Ring vorgesehen, der seinerseits auf dem Nutgrund des Einbauraumes abgestützt ist. Das Querschnittsprofil des O-Ringes ist in keiner Weise an das Querschnittsprofil des zur Verfügung stehenden Raumes angepaßt. Während der Hin- und Herbewegung des relativ verschiebbaren Maschinenteiles kann es dadurch zu Kippbewegungen des Abdichtbandes um seine Dichtkante kommen, was die Erzielung eines guten Abdichtungsergebnisses erschwert.

Der Erfindung liegt die Aufgabe zugrunde, eine Stangen- oder Kolbendichtung mit einem Dichtelement zu zeigen, das bei Temperaturen von wenigstens 100° C einen niedrigen Verschleiß und niedrige Leckraten mit einer guten Gebrauchsdauer in sich vereint. Die vorgeschlagene Stangen- oder Kolbendichtung soll darüber hinaus einfach im Aufbau und unkompliziert im praktischen Gebrauch sein.

Zur Lösung dieser Aufgabenstellung wird erfindungsgemäß eine Stangen- oder Kolbendichtung der eingangs genannten Art vorgeschlagen, die dadurch gekennzeichnet ist, daß der Dichtring aus Polyurethan besteht, wobei die Dichtlippe in der Radialebene der Dichtkante eine Erstreckung in radialer Richtung aufweist, die 0,2- bis 0,3-mal so groß ist wie die radiale Erstreckung des Einbauraumes, wobei die Stangendichtung durch gleichmäßig in Umfangsrichtung verteilte Vorsprünge des Andrückringes in axialer Richtung in der Ausnehmung festgelegt ist und wobei radial außerhalb und innerhalb sowie zwischen den Vorsprüngen Freiräume vorgesehen sind, in die das Material des Andrückringes während der durch den Einbau verursachten, elastischen Verformung auszuweichen vermag. Hierdurch wird eine gute axiale Festlegung der Stangendichtung erreicht, was wichtig ist in bezug auf die Vermeidung von Lage- oder Zuordnungsveränderungen in bezug auf das relativ bewegbare Maschinenteil, insbesondere während dessen Rückführung. Auch bleibt die ursprünglich vorhandene Federelastizität des Andrückringes langfristig erhalten, was von grossem Vorteil ist bezüglich der Gewährleistung einer gleichmäßigen Anpressung der Dichtkante an das relativ bewegte Maschinenteil nach bereits eingetretenem Verschleiß. Die gesamte Stirnfläche der vorgeschlagenen Stangendichtung ist vollkommen unbehindert durch den Druck des abgedichteten Mediums beaufschlagbar. Die Anpressung der Dichtkante an das relativ bewegbare Maschinenteil ist dadurch vom Druck des abgedichteten Mediums abhängig und wird nur in dem Maße vorgenommen wie zur Erzielung eines guten Abdichtungsergebnisses erforderlich. Unnötig hohe Anpressungen, die einen starken Verschleiß zur Folge haben können, werden hierdurch mit vermieden.

Bei der erfindungsgemäß vorgeschlagenen Stangen- oder Kolbendichtung liegt somit der Andrückring selbst am Nutgrund des Einbauraumes an und bewirkt in diesem Bereich die statische Abdichtung. Er ist dadurch in seinem Querschnitt gegenüber einer Ausführung nach der deutschen Offenlegungsschrift 27 35 235 derartig vergrößert, daß er die bei hohen Temperaturen zu erwartenden thermoplastischen Verformungen der dünnen Dichtlippe leicht zu kompensieren vermag. Die Dichtlippe wird dadurch über lange Zeiträume mit einer vollkommen gleichbleibenden Kraft an die Oberfläche des relativ bewegbaren Maschinenteiles angepreßt. Sie zeigt erstaunlicherweise selbst bei Temperaturen von mehr als 100° C keinen nennenswert vergrößerten Verschleiß oder eine nennenswert vergrößerte Lekkage gegenüber den nur bei erheblich niedrigeren Temperaturen verwendbaren Dichtungen nach der deutschen Offenlegungsschrift 27 35 235.

Die Dichtlippe ist in axialer Richtung relativ kurz bemessen, bezogen auf die radiale Erstreckung des Einbauraumes, wodurch trotz der großen Temperaturempfindlichkeit des zur Anwendung gelangenden Werkstoffes eine gute Formstabilität gewährleistet ist. Das Verhältnis aus der axialen Erstreckung der Dichtlippe bis zur Dichtkante und der radialen Erstreckung des Einbauraumes sollte indessen nicht weniger als 0,3 betragen. Hierdurch wird sichergestellt, daß sich ein gutes Abdichtungsergebnis auch bei radialen Schwingungen des relativ bewegbaren Maschinenteils ergibt. Entsprechende Schwingungen können beispielsweise durch angeschlossene Aggregate eingeleitet werden.

Nach einer vorteilhaften Ausgestaltung ist es vorgesehen, daß in den Dichtring auf der von dem abgedichteten Medium abgewandten Seite der Dichtlippe und zu dieser axial benachbart ein Stützring eingebettet ist und daß der Stützring aus einem Werkstoff größerer Temperaturbeständigkeit besteht als der Dichtring. Für die Erzeugung des Stützringes kann Polyamid oder PTFE gut verwendet werden. Beide Werkstoffe zeichnen sich durch eine gute Formstabilität bei höheren Temperaturen aus und vermögen dadurch den Dichtring in seinem rückwärtigen Bereich in radialer Richtung derart abzustützen, daß die Funktion beeinträchtigende Verformungen vermieden werden.

Als zweckmäßig hat es sich erwiesen, wenn der Stützring eine größte radiale Dicke aufweist, die mit der radialen Erstreckung der Dichtlippe in der Radialebene der Dichtkante nach dem Einbau im wesentlichen übereinstimmt. Hierdurch ist eine dichte axiale Annäherung des Stützringes an den Lippenring möglich, was die Gewährleistung einer guten Formbeständigkeit des Dichtringes beim Auftreten hoher Temperaturen ganz wesentlich begünstigt. Zweckmäßigerweise entspricht der axiale Abstand zwischen dem Stützring und der Dichtlippe in etwa deren radialer Erstreckung im Bereich der Dichtkante nach dem Einbau.

Der Gegenstand der vorliegenden Erfindung wird nachfolgend anhand einer Stangendichtung weiter erläutert:

Die gezeigte Stangendichtung ist in halbgeschnittener Darstellung wiedergegeben. Sie umfaßt den Dichtring 1, den Andrückring 2 und den Stützring 3.

Der Einbauraum ist durch eine strichpunktierte, dünne Linie angedeutet, die abgedichtete Stange durch eine durchgezogene, dünne Linie. Beide Linienzüge durchdringen einzelne Elemente der gezeigten Stangendichtung, um anzudeuten, daß die entsprechenden Elemente während des Einbaues eine elastische Deformierung erfahren.

Der Dichtring 1 der gezeigten Stangendichtung besteht aus elastomerem Polyurethan und weist eine Härte Shore A von mehr als 90 auf. Er ist von im wesentlichen rechteckig begrenztem Querschnitt, wobei der Andrückring 2 auf der dem abzudichtenden Medium zugewandten Seite in eine die Dichtlippe außen begrenzende Ausnehmung eingebettet ist und der Stützring 3 in eine der vorgenannten Ausnehmung diagonal gegenüberliegende zweite Ausnehmung.

Der Andrückring 2 besteht aus Gummi einer Härte Shore A von weniger als 85. Er ist an das profil der Ausnehmung des Dichtringes 1 exakt angepaßt und weist auf der Aussenseite eine umlaufende Dichtkante 6 auf, die sich nach dem Einsetzen in den Einbauraum dichtend an dessen Nutgrund anlegt. Abgedichtetes Medium vermag dadurch den Andrückring außenseitig nicht zu passieren.

Der Andrückring 2 weist etwa in der Mitte seiner radialen Erstreckung auf der dem abgedichteten Medium zugewandten Seite eine Anzahl gleichmäßig auf dem Umfang verteilte Vorsprünge 7 auf. Hierdurch wird eine gute axiale Festlegung der Stangendichtung erreicht, was wichtig ist in bezug auf die Vermeidung von Lageoder Zuordnungsveränderungen der Stangendichtung zu dem relativ bewegbaren Maschinenteil insbesondere während dessen Rückführung. Radial außerhalb, innerhalb und zwischen den einzelnen Vorsprüngen 7 sind Freiräume vorhanden. In diese vermag das Material des Dichtringes 1 während der durch den Einbau verursachten, elastischen Verformung auszuweichen. Die ursprünglich vorhandene Federelastizität des Andrückringes bleibt dadurch langfristig erhalten, was von grossem Vorteil ist in bezug auf die Gewährleistung einer gleichmäßigen Anpressung der Dichtkante 5 eines relativ bewegbaren Maschinenteils 8 nach bereits eingetretenem Verschleiß. Die gesamte Stirnfläche der vorgeschlagenen Stangendichtung ist vollkommen unbehindert durch den Druck des abgedichteten Mediums beaufschlagbar. Die Anpressung der Dichtkante 5 an das relativ bewegbare Maschinenteil 8 ist durch vom Druck des abgedichteten Mediums abhängig und wird nur in dem Maße vorgenommen, wie zur Erzielung eines guten Abdichtungsergebnisses erforderlich. Unnötig hohe Anpressungen, die einen starken Verschleiß zur Folge haben können, werden hierdurch mit vermieden.

Der Stützring 3 besteht aus Polyamid und umschließt das abgedichtete Maschinenteil als dünnes Band, wodurch eine gute radiale Abstützung des rückwärtigen Teiles des Dichtringes 1 erreicht wird. Der Stützring ist in Richtung des abgedichteten Mediums außenseitig kegelig verjüngt, wobei die axiale Erstreckung der Verjüngung etwa der radialen Dicke der Dichtlippe entspricht. Eine Druckbeaufschlagung der Stangendichtung durch das abgedichtete Medium führt dadurch zu einer verstärkten Anpressung des Stützringes 3 an die Oberfläche des relativ bewegten Maschinenteiles 8. Spaltextrusionen sind daher ebensowenig zu befürchten wie ein Einschneiden der Vorderkante des Stützringes in den Körper des Dichtringes 1.

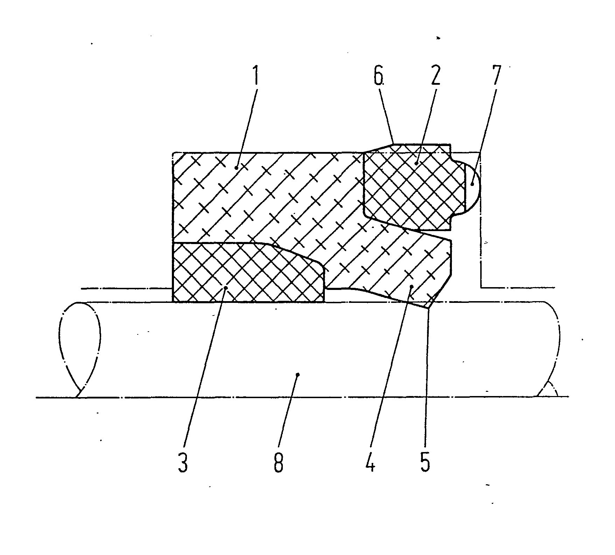

**Patentansprüche**

1. Stangen- oder Kolbendichtung, umfassend einen in einem Einbauraum angeordneten Dichtring (1) mit einer umlaufenden Ausnehmung, der eine axial in Richtung des abgedichteten Mediums vorspringende Dichtlippe (4) mit einer an dem relativ bewegbaren Maschinenteil anliegenden Dichtkante (5) aufweist und aus polymerem Werkstoff besteht, sowie einen in der Ausnehmung angeordneten Andrückring (2) aus elastisch nachgiebigem Material, der einen an das Profil der Ausnehmung angepaßten Querschnitt aufweist sowie eine geringere Härte als der Dichtring (1), wobei die Ausnehmung des Dichtringes (1) auf ihrer gesamten axialen Erstreckung radial in Richtung des Einbauraumes geöffnet ist und wobei der Andrückring (2) vor dem Einbau in der Radialebene der Dichtkante (5) seine größte radiale Erstreckung aufweist, dadurch gekennzeichnet, daß der Dichtring (1) aus Polyurethan besteht, daß die Dichtlippe (4) in der Radialebene der Dichtkante (5) eine Erstreckung in radialer Richtung aufweist, die 0,2- bis 0,3-mal so groß ist wie die radiale Erstreckung des Einbauraumes, daß die Stangendichtung durch gleichmäßig in Umfangsrichtung verteilte Vorsprünge (7) des Andrückringes (2) in axialer Richtung in der Ausnehmung festgelegt ist und daß radial außerhalb und innerhalb sowie zwischen den Vorsprüngen Freiräume vorgesehen sind, in die das Material des Andrückringes (2) während der durch den Einbau verursachten, elastischen Verformung auszuweichen vermag.

2. Dichtung nach Anspruch 1, dadurch gekennzeichnet, daß das Verhältnis aus der axialen Erstreckung der Dichtlippe (4) bis zur Dichtkante (5) und der radialen Tiefe des Einbauraumes 0,3 bis 0,5 beträgt.

3. Dichtung nach Anspruch 1 bis 2, dadurch gekennzeichnet, daß in den Dichtring (1) auf der von dem abgedichteten Medium abgewandten Seite der Dichtlippe (4) und zu dieser axial benachbart ein Stützring (3) eingebettet ist und daß der Stützring aus einem Werkstoff größerer Temperaturbeständigkeit besteht als der Dichtring 1.

4. Dichtung nach Anspruch 3, dadurch gekennzeichnet, daß der Stützring (3) eine größte radiale Dicke aufweist, die mit der radialen Erstreckung der Dichtlippe (4) in der Radialebene der Dichtkante (5) nach dem Einbau im wesentlichen übereinstimmt.

5. Dichtung nach Anspruch 3 bis 4, dadurch gekennzeichnet, daß der Stützring (3) einen axialen Abstand von der durch den 8ereich des Dichtringes (1) zwischen der Ausnehmung und dem relativ bewegten Maschinenteil gebildeten Dichtlippe (4) aufweist, der mit der radialen Erstreckung der Dichtlippe (4) an der Dichtkante (5) nach dem Einbau im wesentlichen übereinstimmt.

6. Dichtung nach Anspruch 1 bis 5, dadurch gekennzeichnet, daß die Vorsprünge (7) etwa in der Mitte der radialen Erstreckung des Andrückringes (2) vorgesehen sind.

**Revendications**

1. Joint pour tige ou piston comprenant une bague d'étanchéité (1) disposée dans une enceinte de montage, avec une cavité périphérique qui présente une lèvre d'étanchéité (4) faisant saillie axialement en direction du fluide à contenir, avec un bord d'étanchéité (5) appuyant sur la pièce de machine à mouvement relatif et réalisé en matériau polymère, ainsi q'une bague de compression (2) en matériau flexible élastiquement diposée dans la cavité, cette bague (2) présentant une section adaptée au profil de la cavité et ayant une dureté plus faible que celle de la bague d'étanchéité (1), tandis que la cavité de la bague d'étanchéité (1) est ouverte sur toute son extension axiale dans le sens radial en direction de l'enceinte de montage et tandis que la bague de compression (2) présente sa plus grande extension radiale avant le montage dans le plan radial du bord d'étanchéité (5), caractérisé en ce que la bague d'étanchéité (1) est réalisée en polyuréthane, que la lèvre d'étanchéité (4) présente dans le plan radial du bord d'étanchéité (5) une extension en direction radiale qui est 0,2 à 0,3 fois aussi grande que l'extension radiale de l'enceinte de montage, que le joint pour tige est fixé en direction axiale dans la cavité par des saillies (7) de la bague de compression (2) réparties uniformément sur la périphérie et que des espaces libres sont prévus radialement à l'extérieur et à l'intérieur ainsi qu'entre les saillies, afin que le matériau de la bague de compression (2) puisse pénétrer dans ces espaces pendant la déformation élastique provoquée par le montage.

2. Joint selon la revendication 1, caractérisé en ce que le rapport des extensions axiales de la lèvre d'étanchéité (4) jusqu'au bord d'étanchéité (5) et de la profondeur radiale de l'enceinte de montage est compris entre 0,3 et 0,5.

3. Joint selon les revendications 1 et 2, caractérisé en ce qu'une bague de support (3) est insérée dans la bague d'étanchéité (1) sur le côté de la lèvre d'étanchéité (4) opposé au fluide à contenir et près de cette lèvre, dans le sens axial, et que la bague de support est constituée d'un matériau ayant une résistance à la température supérieure à celle de la bague d'étanchéité (1).

4. Joint selon la revendication 3, caractérisé en ce que la bague de support (3) présente une plus grande épaisseur radiale qui correspond essentiellement, après le montage, à l'extension radiale de la lèvre d'étanchéité (4) dans le plan radial du bord d'étanchéité (5).

5. Joint selon les revendications 3 et 4, caractérisé en ce que la bague de support (3) présente une distance axiale par rapport à la lèvre d'étanchéité (4) formée dans la zone de la bague d'étanchéité (1) entre la cavité et la pièce de machine à mouvement relatif, cette distance correspondant essentiellement à l'extension radiale de la lèvre d'étanchéité (4) jusqu'au bord d'étanchéité (5) après le montage.

6. Joint selon les revendications 1 à 5, caractérisé en ce que les saillies (7) sont prévues à peu près au milieu de l'extension radiale de la bague de compression (2).

**Claims**

1. A rod or piston seal comprising a sealing ring (1) arranged in an installation space and having a circumferential recess, which sealing ring (1) has a sealing lip (4) projecting axially in the direction of the sealed medium and having a sealing edge (5) bearing against the relatively mobile machine part and is composed of polymeric material, as well·as a pressure ring (2) made of resilient elastic material and arranged in the recess, which pressure ring (2) has a cross-section fitted to the profile of the recess and is less hard than the sealing ring (1), the recess of the sealing ring (1) being open radially in the direction of the installation space over its entire axial extent, and the pressure ring (2) having its largest radial extent prior to installation in the radial plane of the sealing edge (5), characterised in that the sealing ring (1) is composed of polyurethane, in that the sealing lip (4) in the radial plane of the sealing edge (5) has an extent in the radial direction which is 0.2 to 0.3 times as large as the radial extent of the installation space, in that the rod seal is fixed in the recess in axial direction by projections (7) of the pressure ring (2) distributed evenly in circumferential direction, and that free spaces are provided radially outside and inside as well as between the projections, into which free spaces the material of the pressure ring (2) is able to spread during the elastic deformation caused by the installation.

2. A seal according to claim 1, characterised in that the ratio of the axial extent of the sealing lip (4) up to the sealing edge (5) to the radial depth of the installation space is 0.3 to 0.5.

3. A seal according to claim 1 or 2, characterised in that a support ring (3) is embedded in the sealing ring (1) on the side of the sealing lip (4) facing away from the sealed medium and axially adjacent to the sealing lip (4), and in that the support ring is composed of a material of greater thermal stability than the sealing ring (1).

4. A seal according to claim 3, characterised in that the support ring (3) has a largest radial thickness which essentially corresponds to the radial extent of the sealing lip (4) in the radial plane of the sealing edge (5) after installation.

5. A seal according to claim 3 or 4, characterised in that the support ring (3) has an axial spacing from the sealing lip (4) formed by the region of the sealing ring (1) between the recess and the relatively mobile machine part, which spacing essentially corresponds to the radial extent of the sealing lip (4) at the sealing edge (5) after installation.

6. A seal according to any of claims 1 to 5, characterised in that the projections (7) are provided approximately in the middle of the radial extent of the pressure ring (2).

5

EP 0 183 900 B1